Europäisches Patentamt

European Patent Office

Office européen des brevets

(11) Publication number: **0 309 258**
**A2**

# EUROPEAN PATENT APPLICATION

(21) Application number: 88308828.8

(22) Date of filing: 23.09.88

(51) Int. Cl.⁴: **A 21 C 15/00**

(30) Priority: 23.09.87 ZA 877139

(43) Date of publication of application:
29.03.89 Bulletin 89/13

(84) Designated Contracting States:
AT BE CH DE ES FR GB GR IT LI LU NL SE

(71) Applicant: **Wood, Peter**
**7 Stephanus Avenue Glen Marias**
**Kempton Park Transvaal Province  (ZA)**

(72) Inventor: **Wood, Peter**
**7 Stephanus Avenue Glen Marias**
**Kempton Park Transvaal Province  (ZA)**

(74) Representative: **Bayliss, Geoffrey Cyril et al**
**BOULT, WADE & TENNANT 27 Furnival Street**
**London EC4A 1PQ  (GB)**

(54) A hand manipulated utensil for preparing stuffed bread articles.

(57) A hand manipulated utensil for preparing stuffed bread articles 10 includes an elongated handle portion 12 and an elongated probe portion 14 integral with the handle portion 12. The probe portion 14 is in the form of a channel 15 having a floor 16, a pair of laterally spaced side walls 18, and a free end 19. The side walls 18 have longitudinal extending free edges 20. A ramp 22 is provided in the channel 15, the ramp 22 sloping into the channel 15 from the end 14.1 of the probe portion 14 adjacent the handle portion 12. The probe is twisted when inserted into a bread article to displace bread from the interior of the channel to provide a space therein for receiving stuffing.

FIG I

**Description**

# A HAND MANIPULATED UTENSIL FOR PREPARING STUFFED BREAD ARTICLES

THIS INVENTION relates to a hand manipulated utensil for preparing stuffed bread articles.

According to the invention, there is provided a hand manipulated utensil for preparing stuffed bread articles which includes an elongated handle portion; and an elongated probe portion integral with the handle portion for insertion into a bread article, the probe portion extending longitudinally away from the handle portion and being longitudinally aligned therewith, the probe portion being in the form of a channel having a floor and a pair of laterally spaced side walls having longitudinally extending free edges spaced from the floor, the probe being twistable about a longitudinally extending axis when inserted into a bread article to displace bread from the interior of the channel to provide a space therein for receiving stuffing.

The utensil may include a ramp which slopes into the channel from the end of the probe portion adjacent the handle portion, the ramp sloping from said free edges to the floor of the channel in a direction away from the handle and towards the end of the probe portion remote from the handle portion.

The end of the probe portion remote from the handle portion may be tapered to facilitate inserting the utensil into a bread article.

The handle portion may be provided with finger grips to facilitate manipulation of the utensil by a user.

The handle portion may be 120 to 240 mm in length, the elongate probe portion being 160 to 320 mm in length.

The probe portion may be substantially U-shaped in cross-section, having a width between the free edges of the walls of the channel of 10 mm to 50 mm, and a depth of 10 mm to 50 mm.

The width between the free edges of the walls of the channel may be 20 to 22 mm, eg 21 mm, the depth of the channel being 14 to 16 mm, eg 15 mm, the probe portion having a length of 190 to 210 mm, eg 200 mm and the handle portion having a length of 135 to 155 mm, eg 145 mm.

The utensil may be injection moulded out of synthetic plastic material.

The invention will now be described by way of example, with reference to the accompanying diagrammatic drawings, in which:-

Figure 1 shows a side view of a hand manipulated utensil according to the invention;

Figure 2 shows a plan view of the utensil of Figure 1;

Figure 2A shows a cross sectional end view taken at II-II in Figure 2; and

Figures 3A, 3B and 3C show side views of the utensil of Figures 1 and 2 in use.

In the drawings, reference numeral 10 generally indicates a hand manipulated utensil for preparing stuffed bread articles according to the invention. The utensil 10 is injection moulded out of synthetic plastic material.

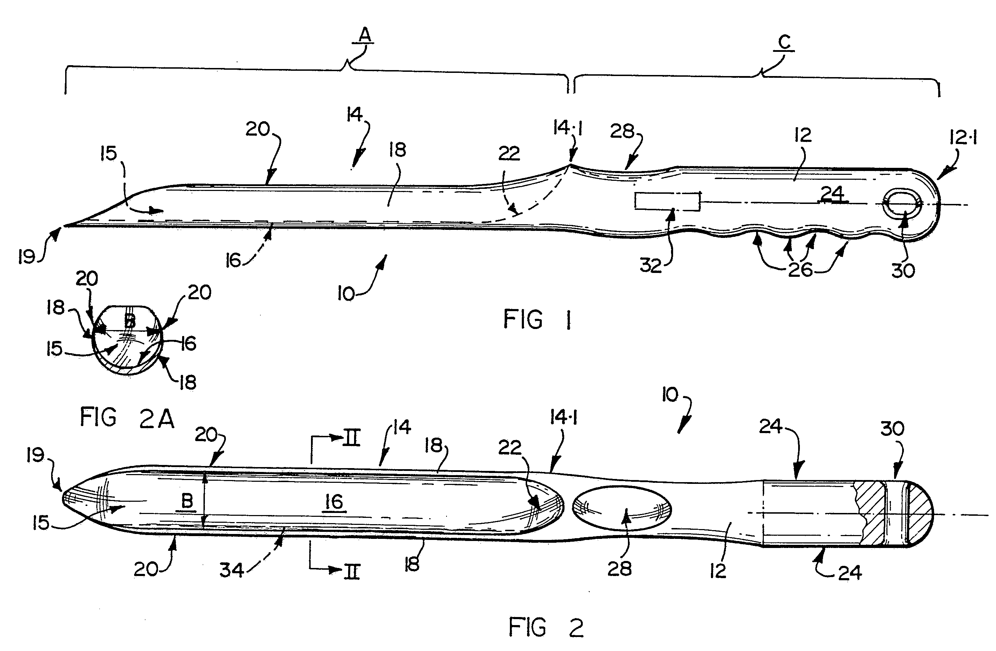

Referring to Figures 1 and 2 of the drawings, the utensil 10 includes an elongated handle portion 12 and an elongated probe portion 14 integral with the handle portion 12. The probe portion 14 is in the form of a channel 15 having a floor 16, a pair of laterally spaced side walls 18, and a free end 19. The side walls 18 have longitudinal extending free edges 20.

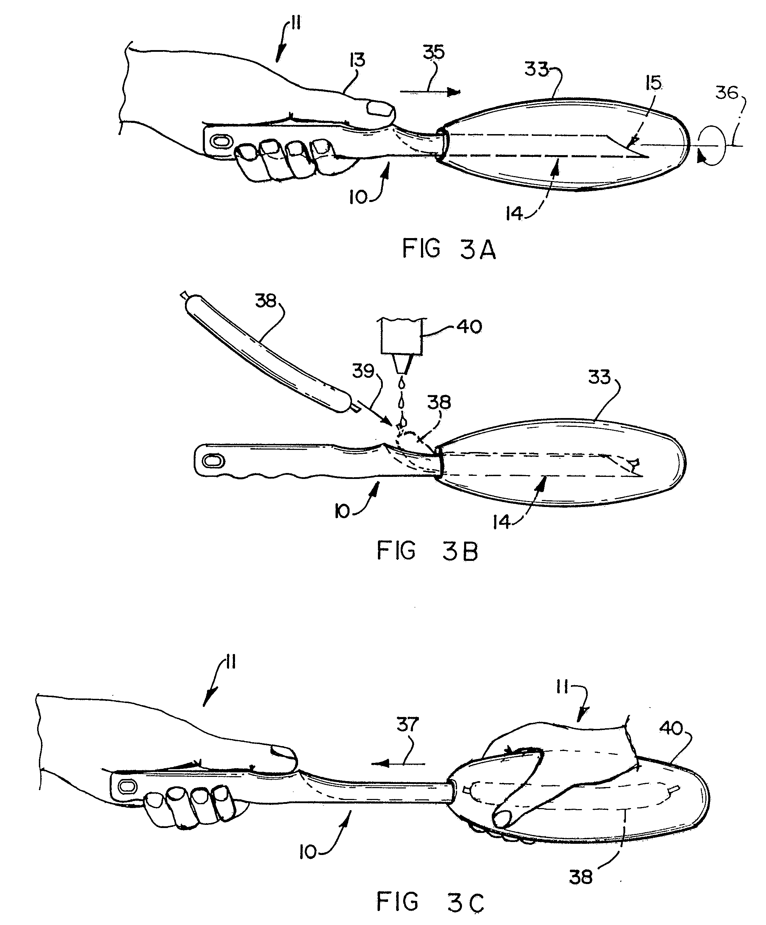

A ramp 22 is provided in the channel 15, the ramp 22 sloping into the channel 15 from the end 14.1 of the probe portion 14 adjacent the handle portion 12. The ramp 22 slopes from the free edges 20 of the channel 15 to the floor 16 of the channel 15, in a direction away from the handle 12 and towards the free end 19 of the probe portion 14. The free end 19 of the probe portion 14 is tapering to a point (see Figure 2), to facilitate inserting the utensil 10 into a bread article, eg a bread roll 33 (Figures 3A, 3B and 3C).

The handle portion 12 has substantially planar side surfaces 24 and has undulations on its lower surface which form finger grips 26, to facilitate manipulation of the utensil 10 by a user 11. The handle portion 12 is also formed with a depression 28 adjacent end 14.1 of probe portion 14 to accommodate the thumb 13 of a user 11. The handle portion 12 also has a passage 30 extending transversely therethrough near the end 12.1 of the handle portion 12 remote from the free end 19 of the channel 15. The opening 30 serves to hitch the utensil 10 onto eg a hook, for storage when not in use.

The handle portion 12 is also formed with a further depression 32, on which a trade name can be embossed.

In one embodiment of the utensil 10, the free edge 20 of one of the walls 18 of the channel 15 is formed with a lip 34 (shown in broken lines in Figure 2) which is directed towards the edge 20 of the other wall 18. The lip 34 assists in displacing bread from the interior of a bread article, to form a space therein for receiving stuffing.

Typically, the probe portion 14 has a length $\underline{A}$ of about 200 mm, and a width $\underline{B}$ between the free edges 20 of the walls 18 of the channel 15 of about 21 mm (Figure 2A). The handle portion 12 typically has a length $\underline{C}$ of about 145 mm, the proportions of the various parts in Figures I and 2 being shown substantially to scale.

In use, and referring to Figures 3A, 3B and 3C of the drawings, the utensil 10 according to the invention is inserted in the direction of arrow 35 (Figure 3A) into a bread roll 33, and the probe portion 14 is twisted about a longitudinally extending axis 36, parallel to the handle and probe, to displace bread from a zone in the interior of the bread roll 33. This zone is in the interior of the channel 15, and provides a space therein for receiving stuffing, eg in the form of a sausage 38 of the type commonly used for hot dogs. Prior to the insertion of the sausage 38 in the direction of arrow 39, sauce 40 eg tomato sauce or mustard, can be poured down the channel 15 and into the interior of the bread roll 33. The channel 15 also acts as a guide to facilitate insertion of the sausage 38 into the space formed inside the bread roll 33. (Figure 3B). The sausage 38 is shown in Figure 3B in solid outline prior to insertion, and in dotted outline after insertion, into the bread roll 33.

As shown in Figure 3C, after insertion of the sausage 38 into the bread roll 33, the probe portion 14 of the utensil 10 is withdrawn in the direction of arrow 37 from the interior of the bread roll 33. This speedily and efficiently forms a stuffed bread roll 40, typically a hot dog, in a fashion which the Applicant believes will lead to little or no spillage of sauce, and little or no wastage of bread.

The utensil 10 according to the invention can also be used to prepare other types of stuffed bread articles, eg bread rolls or loaves or buns stuffed with meat, egg, fish fillings and the like.

**Claims**

1. A hand manipulated utensil (10) for preparing stuffed bread articles (40) characterized in that it includes
an elongated handle portion (12); and
an elongated probe portion (14) integral with the handle portion (12) for insertion into a bread article (33),
the probe portion (14) extending longitudinally away from the handle portion (12) and being longitudinally aligned therewith, the probe portion (14) being in the form of a channel (15) having a floor (16) and a pair of laterally spaced side walls (18) having longitudinally extending free edges (20) spaced from the floor (16), the probe (14) being twistable about a longitudinally extending axis (36) when inserted into a bread article (33) to displace bread from the interior of the channel (15) to provide a space therein for receiving stuffing (36).

2. A utensil (10) as claimed in Claim 1 characterized in that it includes a ramp (22) which slopes into the channel (15) from the end (14.1) of the probe portion (14) adjacent the handle portion (12), the ramp (22) sloping from said free edges (20) to the floor (16) of the channel (15) in a direction away from the handle (12) and towards the end (19) of the probe portion (14) remote from the handle portion (12).

3. A utensil (10) as claimed in Claim 1 or Claim 2 characterized in that the end (19) of the probe portion (14) remote from the handle portion (12) is tapered to facilitate inserting the utensil into a bread article (33).

4. A utensil (10) as claimed in any one of the preceding claims characterized in that the handle portion (12) is provided with finger grips (26) to facilitate manipulation of the utensil (10) by a user (11).

5. A utensil (10) as claimed in any one of the preceding claims characterized in that the handle portion (12) is 120 to 240 mm in length, the elongate probe portion (14) being 160 to 320 mm in length.

6. A utensil (10) as claimed in any one of the preceding claims characterized in that the probe portion (14) is substantially U-shaped in cross-section, having a width (B) between the free edges (20) of the walls (18) of the channel (15) of 10 mm to 50 mm, and a depth of 10 mm to 50 mm.

7. A utensil (10) as claimed in Claim 6, characterized in that the width (B) between the free edges (20) of the walls (18) of the channel (15) is 20 to 22 mm, the depth of the channel (15) is 14 to 16 mm, and wherein the probe portion (14) has a length (A) of 190 to 210 mm, and the handle portion (12) has a length (C) of 135 to 155 mm.

8. A utensil (10) as claimed in any one of the preceding claims characterized in that it is injection moulded out of synthetic plastic material.

FIG 1

FIG 2

FIG 2A

FIG 3A

FIG 3B

FIG 3C